# EUROPEAN PATENT SPECIFICATION

(11) **EP 3 491 062 B1**
(45) Date of publication and mention of the grant of the patent: **14.04.2021**
(21) Application number: 17742709.3
(22) Date of filing: 14.07.2017
(51) Int. Cl.: C08L 67/02, F16D 3/84

(54) **BOOT FOR CONSTANT VELOCITY JOINT AND A POLYMER COMPOSITION SUITABLE FOR PREPARING SUCH A JOINT**
MUFFE FÜR GLEICHLAUFGELENK UND EINE ZUR HERSTELLUNG SOLCH EINES GELENKS GEEIGNETE POLYMERZUSAMMENSETZUNG
SOUFFLET DE JOINT HOMOCINÉTIQUE ET COMPOSITION POLYMÈRE APPROPRIÉE POUR CE JOINT

(30) Priority: 28.07.2016 EP 16181661
(43) Date of publication of application: 05.06.2019
(73) Proprietor: DSM IP Assets B.V., 6411 TE Heerlen (NL)
(72) Inventor: KEESTRA, Beert, Jacobus, 6100 AA ECHT (NL); TOMIC, Katarina, 6100 AA ECHT (NL)
(74) Representative: DSM Intellectual Property
(86) International application number: PCT/EP2017/067833
(87) International publication number: WO 2018/019614

(56) References cited:
- EP-A2- 0 784 079
- JP-A- 2007 023 076
- US-A1- 2003 143 353

## Description

The invention relates to boot for constant velocity joint and a polymer composition comprising a thermoplastic polyester elastomer suitable for preparing such a boot. Drive shafts of a car comprise one or more constant velocity joints. Constant velocity joints (CV joints) allow a drive shaft to transmit power through a variable angle, at constant rotational speed, without an appreciable increase in friction or play. They are used in front wheel drive vehicles, and many modern rear wheel drive cars with independent rear suspension.

CV joints are protected by a flexible boot. The boot is usually filled with molybdenum disulfide containing grease. The boot protects the CV joint against moisture and contaminants to penetrate into the CV joint. Thermoplastic polyester elastomer is generally used to produce the boot, since it has favorable properties for this application, providing a long life under all kind of climate conditions.

A problem of a boot of a CV-joint of a thermoplastic elastomer is that it produces noise during driving of the car. Such noise is sometimes indicated by squeaking. It is expected that the noise is caused by the rubbing of the flanges of the boot against each other, especially under wet conditions. The occurrence of the noise becomes a bigger problem, because the motors of modern cars are more and more silent, so that the noise caused by the boots of the CV joints becomes more and more notable.

EP0784079A relates to a constant velocity joint boot and lubricants that may be employed, such as ethylene bis stearic acid amide.

US2003/143353 relates to a constant velocity joint and a constant velocity joint lubricant.

Attempts are made to reduce the noise by adding a wax to the polymer composition of the boot. Although a considerable initial noise reduction was obtained, after about 10000 - 20000 km driving the noise pops up again. Increasing the amount of wax was not possible. This results in a too slippery surface of the boot, because of which it is not possible any more to mount the boot. It even may cause problems in the production process of the boots.

Aim of the invention is to provide a boot for a CV joint that shows a considerable larger noise reduction than the known boot.

Surprisingly this object has been obtained by a boot of a polymer composition comprising thermoplastic polyester elastomer, a first, fast diffusing wax having a weight loss of more than 0.60 weight % (wt.%) and a second, slow diffusing wax having a weight loss less than 0.40 wt.% after 2500 hours, measured according to the method as described in the examples and wherein the thermoplastic polyester elastomer comprises polyester hard segments and soft segments derived from another polymer.

Preferably the weight loss of the first wax is higher than 0.7 wt.%, more preferably higher than 0.8 wt.% after 2500 hours. Preferably the weight loss of the second wax is lower than 0.35 wt.%, more preferably lower than 0.3 wt.% after 2500 hours.

"Is between" hereby explicitly includes the values mentioned.

The invention also relates to a polymer composition comprising:
a. A thermoplastic polyester elastomer;
b. A first wax being an unsaturated amide in an amount of between 0.01 and 0.6 wt% with formula (1a) and/or formula (1b)

   Rₓ-CO-NH-(CH₂)ₙ-NH-CO-Rₓ Formula (1a)

   R_{y}-NH-CO-(CH₂)ₙ-CO-NH-R_{y} Formula (1b)

   In which n is between 1 and 8;
   And Rₓ and R_{y} is an alkenylgroup with a number of carbon atoms between 8 and 22;
c. A second wax being a saturated amide in an amount of between 0.01 and 1.0 wt% with formula (2a) and/or formula (2b)

   Rᵥ-CO-NH-(CH₂)ₙ-NH-CO-Rᵥ Formula (2a)

   R_{w}-NH-CO-(CH₂)ₙ-CO-NH-R_{w} Formula (2b)

   In which n is between 1 and 8;
   And Rᵥ and R_{w} is an alkylgroup with a number of carbon atoms between 8 and 22;
   Wherein wt% is given with respect to the total weight of the polymer composition and wherein the thermoplastic polyester elastomer comprises polyester hard segments and soft segments derived from another polymer.

Boots for a constant velocity joint made from these compositions exhibit good noise reduction. Preferably, the thermoplastic polyester elastomer comprises soft segments of poly(tetrathydrofuran)diol or polyethyleneoxide glycol, as defined below. Rₓ, R_{y}, Rᵥ, R_{w} may be substituted or unsubstituted. If substituted, the substituent may be for example a hydroxy-, alkyl- and/or alkenyl group.

A first wax according to formula (1a) is for example N,N'-ethylene bis oleamide, also referred to as ethylene bis oleamide, in which n=2 and Rₓ is -C₁₇H₃₃ and thus having 17 carbon atoms. Another example is N,N'-hexamethylene bis oleamide, also referred to as hexamethylene bis oleamide, in which n=2 and Rₓ is -C₁₇H₃₃ and thus having 17 carbon atoms.

A first wax according to formula (1b) is for example N,N'-dioleyl adipamide, in which n=4 and R_{y} is -C₁₈H₃₅ and thus having 18 carbon atoms.

Examples of a second wax according to formula (2a) are listed in Table 1 below.

**Table 1; examples of second wax according to formula (2a)**

| Name | n | **Rᵥ** | **Number of C atoms in Rᵥ** |
|---|---|---|---|
| N,N'-ethylene bis stearamide, also referred to as ethylene bis stearamide. | 2 | -C₁₇H₃₅ | 17 |
| N,N'-ethylene bis capramide, also referred to as ethylene bis capramide. | 2 | -C₉H₁₉ | 9 |
| N,N'-ethylene bis lauramide, also referred to as ethylente bis lauramide. | 2 | -C₁₁H₂₃ | 11 |
| N,N'-methylene bis stearamide also referred to as methylene bis stearamide. | 1 | -C₁₇H₃₅ | 17 |
| N,N'-hexamethylene bis stearamide, also referred to as hexamethylene bis stearamide. | 6 | -C₁₇H₃₅ | 17 |
| N,N'-ethylene bis behenamide, also referred to as ethylene bis behenamide. | 2 | -C₂₁H₄₃ | 21 |
| N,N'-ethylene bis 12-hydroxystearamide, also referred to as ethylene bis 12-hydroxystearamide. | 2 | - C₁₇H₃₄(OH) | 17 |
| N,N'-hexamethylene bis behenamide | 6 | -C₂₁H₄₃ | 21 |
| N,N'-hexamethylene bis 12-hydroxystearamide | 6 | - C₁₇H₃₄(OH) | 17 |

An example of a second wax according to formula (2b) is N,N'-distearyl adipamide, in which n is 4 and R_{w} is -C₁₈H₃₅ and thus having 18 carbon atoms.

Preferably, the number of carbon atoms for each Rₓ, R_{y}, Rᵥ, R_{w} is between 14 and 18, as this ensures that the waxes exhibit a favourable weight loss difference.

Preferably, difference in carbon atoms of R in the first wax and R of the second wax is at most 5, preferably at most 3 and even more preferred at most 1, thus |Rₓ-Rᵥ| or |Rₓ-R_{w}| or |R_{y}-Rᵥ| or |R_{y}-R_{w}| is at most 5, preferably at most 3 and even more preferred at most 1.

This has the advantage that the molecular weight of the first and second wax is similar and the waxes exhibit a favourable weight loss difference.

Preferably, Rₓ and/or Rᵥ, is obtained from a fatty acid and/or R_{y} and/or R_{w} is obtained from a fatty amine. Examples of fatty acids include palmitoleic acid, oleic acid, linoleic acid and combinations thereof. Examples of fatty amines include hexadecylamine, octadecyl amine, olyelamine and combinations thereof.

The first and second waxes according to formula's (1a), (1b), (2a) and (2b) may include mixtures of various formula's, as may for example be the case if prepared from natural occurring fatty acids or fatty amines, which may consist of mixtures itself.

If mixtures of first waxes and/or seconed waxes are present, the first wax, being present in the highest amount and the second wax being present in the highest amount determines which number of carbon atoms is employed for the preferred embodiment in which the difference in carbon atoms of R in the first wax and R of the second wax is at most 5, preferably at most 3 and even more preferred at most 1.

In a preferred embodiment, the invention relates to a boot for a constant velocity joint made of a polymer composition comprising:
a. A thermoplastic polyester elastomer;
b. A first wax being an unsaturated amide in an amount of between 0.01 and 0.6 wt% with formula (1a)

   Rₓ-CO-NH-(CH₂)ₙ-NH-CO-Rₓ Formula (1a)

   In which n is between 1 and 8;
   And Rₓ is an alkenylgroup with a number of carbon atoms between 14 and 18;
c. A second wax being a saturated amide in an amount of between 0.01 and 1.0 wt% with formula (2a)

   Rᵥ-CO-NH-(CH₂)ₙ-NH-CO-Rᵥ Formula (2a)

   In which n is between 1 and 8;
   And Rᵥ is an alkylgroup with a number of carbon atoms between 14 and 18;
   Wherein wt% is given with respect to the total weight of the polymer composition.

More preferred, the first wax is N,N'-ethylene bis oleamide, in which n=2 and Rₓ is - C₁₇H₃₃ and thus having 17 carbon atoms and the second wax is N,N'-ethylene bis stearamide, in which n=22 and Rᵥ is -C₁₇H₃₅ and thus having 17 carbon atoms.

### The thermoplastic elastomer

The thermoplastic copolyester elastomers are thermoplastic polymers with elastomeric properties comprising polyester hard segments and soft segments derived from another polymer. The polyester hard segments in the copolyester elastomers are generally composed of monomer units derived from at least one alkylene diol and at least one aromatic or cycloaliphatic dicarboxylic acid.

The hard segments typically consist of a polyester having a melting temperature or glass transition temperature, where applicable, well above room temperature. Preferably the melting temperature or glass transition temperature of the hard segment is at least 150 °C, more preferably at least 170 °C or even at least 190 °C. Still more preferably the melting temperature or glass temperature of the hard segments is in the range of 200 - 280 °C, or even 220 - 250 °C. The soft segments typically consist of an amorphous polymer having a glass transition temperature well below room temperature. Preferably the glass temperature of the amorphous polymer is at most 0 °C, more preferably at most -10 °C or even at most -20 °C. Still more preferably the glass temperature of the soft segments is in the range of -20 - -50 °C, or even -30 - -80 °C.

Examples of copolyester elastomers include a copolyesterester elastomer, a copolycarbonateester elastomer or a copolyetherester elastomer; i.e. a copolyester block copolymer with soft segments derived from a polyester, a polycarbonate or, respectively, a polyether. Copolyester elastomers are available, for example, under the trade name Arnitel®, from DSM Engineering Plastics B.V., The Netherlands.

Copolyetherester elastomers have soft segments derived from at least one polyalkylene oxide glycol. Copolyetherester elastomers and the preparation and properties thereof are in the art and for example described in detail in Thermoplastic Elastomers, 2nd Ed., Chapter 8, Carl Hanser Verlag (1996) ISBN 1-56990-205-4, Handbook of Thermoplastics, Ed. O. Oltabisi, Chapter 17, Marcel Dekker Inc., New York 1997, ISBN 0-8247-9797-3, and the Encyclopaedia of Polymer Science and Engineering, Vol. 12, pp. 75-117 (1988), John Wiley and Sons, and the references mentioned therein.

The aromatic dicarboxylic acid in the hard segments of the copolyester elastomer suitably is selected from the group consisting of terephthalic acid, isophthalic acid, phthalic acid, 2,6-naphthalenedicarboxylic acid and 4,4-diphenyldicarboxylic acid, and mixtures thereof. Preferably, the aromatic dicarboxylic acid in the hard segments of the polyetherester elastomer suitably is selected from the group consisting of terephthalic acid, isophthalic acid, phthalic acid, 2,6-naphthalenedicarboxylic acid and 4,4-diphenyldicarboxylic acid, and mixtures thereof. Preferably, the aromatic dicarboxylic acid comprises terephthalic acid, more preferably consists for at least 50 mole %, still more preferably at least 90 mole %, or even fully consists of terephthalic acid, relative to the total molar amount of dicarboxylic acid.

The alkylene diol in the hard segments of the copolyester elastomer suitably is selected from the group consisting of ethylene glycol, propylene glycol, 1,2-butane diol, 1,3-butane diol, 1,4-butane diol, 2,3-butane diol, , 1,2-hexane diol, 1,6-hexane diol, benzene dimethanol, cyclohexane diol, cyclohexane dimethanol, and mixtures thereof. Preferably, the alkylene diol in the hard segments of the polyetherester elastomer suitably is selected from the group consisting of ethylene glycol, propylene glycol, 1,2-butane diol, 1,3-butane diol, 1,4-butane diol, 2,3-butane diol, , 1,2-hexane diol, 1,6-hexane diol, benzene dimethanol, cyclohexane diol, cyclohexane dimethanol, and mixtures thereof.

Preferably, the alkylene diol comprises ethylene glycol and/or 1,4-butane diol, more preferably consists for at least 50 mole %, still more preferably at least 90 mole %, or even fully consists of ethylene glycol and/or 1,4-butane diol, relative to the total molar amount of alkylene diol.

The hard segments of the copolyester elastomer most preferably comprise or even consist of polybutylene terephthalate segments. In another preferred embodiment, the polyetherester elastomer comprise or even consist of polybutylene terephthalate segments.

Suitably, the polyalkylene oxide glycol is a homopolymer or copolymer on the basis of oxiranes, oxetanes and/or oxolanes. Examples of suitable oxiranes, whereupon the polyalkylene oxide glycol may be based, are ethylene oxide and propylene oxide. The corresponding polyalkylene oxide glycol homopolymers are known by the names polyethylene glycol, polyethylene oxide, or polyethylene oxide glycol (also abbreviated as PEG or PEO), and polypropylene glycol, polypropylene oxide or polypropylene oxide glycol (also abbreviated as PPG or PPO), respectively. An example of a suitable oxetane, whereupon the polyalkylene oxide glycol may be based, is 1,3-propyleneoxide. The corresponding polyalkylene oxide glycol homopolymer is known by the name of 1,3-propanediol or poly(trimethylene)glycol. An example of a suitable oxolane, where upon the polyalkylene oxide glycol may be based, is tetrahydrofuran. The corresponding polyalkylene oxide glycol homopolymer is known by the name of poly(tetramethylene)glycol (PTMG) or polytetrahydrofuran (PTHF). The polyalkylene oxide glycol copolymer can be random copolymers, block copolymers or mixed structures thereof. Suitable copolymers are, for example, ethylene oxide/propylene oxideblock-copolymers, (or EO/PO block copolymer), in particular polyethylene-oxide glycol-terminated polypropylene oxide .

The polyalkylene oxide can also be based on the etherification product of alkylene diols or mixtures of alkylene diols or low molecular weight poly alkylene oxide glycol or mixtures of the aforementioned glycols.

Preferably, the polyalkylene oxide glycol is selected from the group consisting of polypropylene oxide glycol homopolymers (PPG), ethylene oxide / polypropylene oxide block-copolymers (EO/PO block copolymer) and poly(tetramethylene)glycol (PTMG), and mixtures thereof.

It is also possible that the polymer composition comprises a thermoplastic polyester elastomer comprising monomer units of dimerised fatty acids and/or a diamine derived there from. A very strong adhesion is obtained and also a high resistance against fatty acids.

Such dimerised fatty acids may be obtained by the dimerisation of a monomeric unsaturated fatty acid and are indicated by dimerised fatty acid.

After the fatty acid oligomerization reaction the so obtained oligomer mixture is further processed, for example by distillation, to yield a mixture having a high content of the dimerised fatty acid. Residual double bonds in the dimerised fatty acid may be saturated by catalytic hydrogenation. The term dimerised fatty acid as it is used here relates to both types of these dimerised fatty acids, the saturated and the unsaturated. It is preferred that the dimerised fatty acid is saturated.

The dimerised fatty acids preferably contain from 32 up to 44 carbon atoms. Most preferably the dimerised fatty acid contains 36 carbon atoms. The amount of C-atoms is an average value, since the dimerised fatty acids normally are commercially available as a mixture.

It is also possible to produce a derivative of the dimerised fatty acid by replacing one or two of the acid groups by an amine group by one of the well-known reactions.

Preferably the thermoplastic elastomer contains 40 - 80 wt. % of polybutylene terephthalate hard segments and between 20 and 60 wt. % of monomer units of dimerised fatty acid and/or a diamine derived therefrom.

The first wax preferably is an unsaturated bis amide. More preferred, the first wax is a bis amide with unsaturated fatty acid. Examples of such waxes include ethylenebis oleamide, hexamethylenebis oleamide and N,N'- Dioleyl adipamide. Preferably ethylenebis oleamide is used.
The second wax preferably is a saturated bis amide. More preferred the second wax is a bis amide with saturated fatty acid. Examples include ethylenebis stearamide, ethylenebis lauramide, ethylenebis capramide, methylenebis stearamide, hexamethylenebis stearamide, ethylenebis behenamide and ethylenebis 12-hydroxystearamide. Preferably ethylenebis stearamide is used. The amount of the first wax in the polymer composition may be between 0.01 and 0.6 wt.%, preferably between 0.02 and 0.2 wt.%. The amount of the second wax may be between 0.01 and 1.0 wt.%, preferably between 0.03 and 0.5 wt.% with respect to the total amount of the polymer composition.

Further components may be pigments, colorants, heat stabilizers etc. The invention also relates to a polymer composition suitable for the production of the boots according to the invention.

### Examples

### Materials used:

Arnitel® PB420, a thermoplastic polyester elastomer delivered by DSM. PBT hard block; PEO-PPO-PEO soft block.

Arnitel® EB 464, a thermoplastic polyester elastomer delivered by DSM PBT hard block; PTHF soft block.

Wax 1: Ethylenebis oleamide, being N,N'-ethylene bis oleamide, in which n=2 and Rₓ is -C₁₇H₃₃ and thus having 17 carbon atoms.

Wax 2: Ethylenebis stearamide, being N,N'-ethylene bis stearamide, in which n=22 and Rᵥ is -C₁₇H₃₅ and thus having 17 carbon atoms.

### Tests:

### Reversed wax uptake

In order to determine the weight loss of a wax the reverse uptake test has been performed. Injection molded plates of the compositions of the examples and comparative experiments of 120x120 mm and 1mm thickness were dried for 15 hrs. at 130°C. Dry plates were fully immersed in fast and slow wax, respectively, for 16 hrs. at 158°C. After saturation plates are taken out cleaned and their weight is measured as a function of time at 23°C and 50% relative humidity. Before every measurement the surface of plates is cleaned with a tissue to remove excess of wax. At the same time, control dry sample of the same composition, but without the waxes is exposed to the same conditions. Weight of the plate is measured as function of time. Weight changes of control sample reflect effect of moisture sorption in the plates.

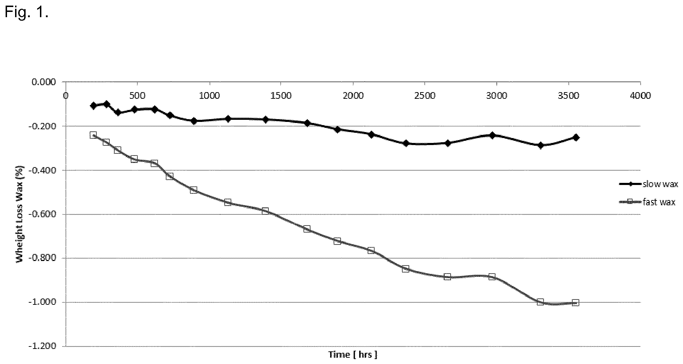

To obtain effect of each individual wax, weight of control sample has been subtracted from the weight of wax-saturated sample, for both waxes. Resulting reverse uptake curve shows weight loss of a plate due to wax migration, for both fast and slow wax. The amount of weight loss at a given time is a measure of diffusion speed. The results for wax 1 (the fast wax) and wax 2 (the slow wax) are shown in Fig. 1.

### Squeak test

The squeak was measured by placing a circular sheet of the composition according to the examples and the comparative experiments, with a thickness of 2 mm and a diameter of 110 mm on top of a rotary platform abraser from Taber Industries (type 5135). Two wheels of the same composition having an outer diameter of 50 mm and a thickness of 10 mm were pushed with a nominal force of 1 kg each against the circular sheet at the outside diameter of that sheet. By rotating the circular sheets the wheels were forced to rotate with a speed of 60 RPM. Water droplets were supplied on the surface of the wheels contacting the circular sheet in an amount of 0.6 ml per minute. With a microphone the occurrence of squeak was determined. The time interval after which a sudden increase in squeak begins is determined.

### Comparative example A

The squeak of a composition of Arnitel™ PB420 and 0.1 wt.% of the first wax was determined with the squeak test as described above. The time to squeak was 34.6 hours.

### Example I

The squeak of a composition of Arnitel™ PB420, 0.1 wt.% of wax 1 and 0.3 wt.% of wax 2 was determined with the squeak test as described above. The time to squeak was 51.2 hours.

### Comparative example B

As comparative experiment A, but as thermoplastic polyester elastomer Arnitel™ EB 464 was used. The time to squeak was 38.6 hours.

### Example II

As example I, but as thermoplastic polyester elastomer Arnitel™ EB 464 is used. The time to squeak is 55.9 hours.

## Claims

1. Boot for a constant velocity joint made of a polymer composition comprising a thermoplastic polyester elastomer, **characterized in that** the polymer composition comprises a first wax having a weight loss of more than 0.6 wt.%, and comprising a second wax having a weight loss of less than 0.4 wt.% after 2500 hours, measured according to described method, wherein the thermoplastic polyester elastomer comprises polyester hard segments and soft segments derived from another polymer.

2. Boot according to claim 1, wherein the weight loss of the first wax is higher than 0.7 wt.%.

3. Boot according to claim 1 or 2, wherein the weight loss is higher than 0.8 wt.% after 2500 hours.

4. Boot according to any one of the preceding claims, wherein the weight loss of the second wax is lower than 0.35 wt.%

5. Boot according to any one of the preceding claims, wherein the weight loss of the second wax is lower than 0.3 wt.%.

6. Boot according to any one of the preceding claims, wherein the first wax is an unsaturated bis amide.

7. Boot according to any one of the preceding claims, wherein the first wax is ethylenebis oleamide.

8. Boot according to any one of the preceding claims, wherein the second wax is a saturated bis amide.

9. Boot according to any one of the preceding claims, wherein the second wax is ethylenebis stearamide.

10. Polymer composition comprising:
a. A thermoplastic polyester elastomer;
b. A first wax being an unsaturated amide in an amount of between 0.01 and 0.6 wt% with formula (1a) and/or formula (1b)
Rₓ-CO-NH-(CH₂)ₙ-NH-CO-Rₓ Formula (1a)
R_{y}-NH-CO-(CH₂)ₙ-CO-NH-R_{y} Formula (1b)
In which n is between 1 and 8;
And Rₓ and R_{y} is an alkenylgroup with a number of carbon atoms between 8 and 22;
c. A second wax being a saturated amide in an amount of between 0.01 and 1.0 wt% with formula (2a) and/or formula (2b)
Rᵥ-CO-NH-(CH₂)ₙ-NH-CO-Rᵥ Formula (2a)
R_{w}-NH-CO-(CH₂)ₙ-CO-NH-R_{w} Formula (2b)
In which n is between 1 and 8;
And Rᵥ and R_{w} is an alkylgroup with a number of carbon atoms between 8 and 22;
Wherein wt% is given with respect to the total weight of the polymer composition and wherein the thermoplastic polyester elastomer comprises polyester hard segments and soft segments derived from another polymer.

11. Polymer composition according to claim 10, wherein the thermoplastic polyester elastomer comprises soft segments of poly(tetrahydrofuran)diol or PEO-PPO-PEO glycol.

12. Polymer composition according to claim 10 or 11, wherein the number of carbon atoms for each Rₓ, R_{y}, Rᵥ, R_{w} is between 14 and 18.

13. Polymer composition according to any of the claims 10 to 12, wherein the difference in carbon atoms of R in the first wax and R of the second wax is at most 5.

14. Polymer composition according to any of the claims 10 to 13, wherein the first wax is ethylenebis oleamide and the second wax is ethylenebis stearamide.

## Patentansprüche

1. Muffe für ein Gleichlaufgelenk, die aus einer, ein thermoplastisches Polyesterelastomer umfassenden Polymerzusammensetzung hergestellt ist, **dadurch gekennzeichnet, dass** die Polymerzusammensetzung ein erstes Wachs mit einem Gewichtsverlust von mehr als 0,6 Gew.-% und ein zweites Wachs mit einem Gewichtsverlust von weniger als 0,4 Gew.-%, nach 2500 Stunden, bei Messung gemäß dem beschriebenen Verfahren, umfasst, wobei das thermoplastische Polyesterelastomer Polyester-Hartsegmente und von einem anderen Polymer abgeleitete Weichsegmente umfasst.

2. Muffe nach Anspruch 1, wobei der Gewichtsverlust des ersten Wachses mehr als 0,7 Gew.-% beträgt.

3. Muffe nach Anspruch 1 oder 2, wobei der Gewichtsverlust nach 2500 Stunden mehr als 0,8 Gew.-% beträgt.

4. Muffe nach einem der vorhergehenden Ansprüche, wobei der Gewichtsverlust des zweiten Wachses weniger als 0,35 Gew.-% beträgt.

5. Muffe nach einem der vorhergehenden Ansprüche, wobei der Gewichtsverlust des zweiten Wachses weniger als 0,3 Gew.-% beträgt.

6. Muffe nach einem der vorhergehenden Ansprüche, wobei es sich bei dem ersten Wachs um ein ungesättigtes Bisamid handelt.

7. Muffe nach einem der vorhergehenden Ansprüche, wobei es sich bei dem ersten Wachs um Ethylenbisölsäureamid handelt.

8. Muffe nach einem der vorhergehenden Ansprüche, wobei es sich bei dem zweiten Wachs um ein gesättigtes Bisamid handelt.

9. Muffe nach einem der vorhergehenden Ansprüche, wobei es sich bei dem zweiten Wachs um Ethylenbisstearinsäureamid handelt.

10. Polymerzusammensetzung, umfassend:
a. ein thermoplastisches Polyesterelastomer;
b. ein erstes Wachs, bei dem es sich um ein ungesättigtes Amid mit der Formel (1a) und/oder Formel (1b) in einer Menge zwischen 0,01 und 0,6 Gew.-% handelt,
Rₓ-CO-NH-(CH₂)ₙ-NH-CO-Rₓ Formel (1a)
R_{y}-NH-CO-(CH₂)ₙ-CO-NH-R_{y} Formel (1b)
worin n zwischen 1 und 8 ist;
und Rₓ und R_{y} für eine Alkenylgruppe mit einer Zahl von Kohlenstoffatomem zwischen 8 und 22 stehen;
c. ein zweites Wachs, bei dem es sich um ein gesättigtes Amid mit der Formel (2a) und/oder Formel (2b) in einer Menge zwischen 0,01 und 1,0 Gew.-% handelt,
Rᵥ-CO-NH-(CH₂)ₙ-NH-CO-Rᵥ Formel (2a)
R_{w}-NH-CO-(CH₂)ₙ-CO-NH-R_{w} Formel (2b)
worin n zwischen 1 und 8 ist;
und Rᵥ und R_{w} für eine Alkylgruppe mit einer Zahl von Kohlenstoffatomem zwischen 8 und 22 stehen;
wobei die Gew.-% bezogen auf das Gesamtgewicht der Polymerzusammensetzung angegeben sind und wobei das thermoplastische Polyesterelastomer Polyester-Hartsegmente und von einem anderen Polymer abgeleitete Weichsegmente umfasst.

11. Polymerzusammensetzung nach Anspruch 10, wobei das thermoplastische Polyesterelastomer Weichsegmente von Poly(tetrahydrofuran)diol oder PEO-PPO-PEO-Glykol umfasst.

12. Polymerzusammensetzung nach Anspruch 10 oder 11, wobei die Zahl der Kohlenstoffatome für jeden Rₓ, R_{y}, Rᵥ, R_{w} zwischen 14 und 18 beträgt.

13. Polymerzusammensetzung nach einem der Ansprüche 10 bis 12, wobei die Differenz an Kohlenstoffatomen von R im ersten Wachs und R des zweiten Wachses höchstens 5 beträgt.

14. Polymerzusammensetzung nach einem der Ansprüche 10 bis 13, wobei es sich bei dem ersten Wachs um Ethylenbisölsäureamid handelt und bei dem zweiten Wachs um Ethylenbisstearinsäureamid handelt.

## Revendications

1. Soufflet pour un joint homocinétique fait d'une composition de polymère comprenant un élastomère de polyester thermoplastique, **caractérisé en ce que** la composition de polymère comprend une première cire possédant une perte de poids de plus de 0,6 % en poids, et une deuxième cire possédant une perte de poids de moins de 0,4 % en poids après 2 500 heures, mesurée selon le procédé décrit, l'élastomère de polyester thermoplastique comprenant des segments durs et des segments souples de polyester issus d'un autre polymère.

2. Soufflet selon la revendication 1, la perte de poids de la première cire étant supérieure à 0,7 % en poids.

3. Soufflet selon la revendication 1 ou 2, la perte de poids étant supérieure à 0,8 % en poids après 2 500 heures.

4. Soufflet selon l'une quelconque des revendications précédentes, la perte de poids de la deuxième cire étant inférieure à 0,35 % en poids.

5. Soufflet selon l'une quelconque des revendications précédentes, la perte de poids de la deuxième cire étant inférieure à 0,3 % en poids.

6. Soufflet selon l'une quelconque des revendications précédentes, la première cire étant un bisamide insaturé.

7. Soufflet selon l'une quelconque des revendications précédentes, la première cire étant le bisoléamide d'éthylène.

8. Soufflet selon l'une quelconque des revendications précédentes, la deuxième cire étant un bisamide saturé.

9. Soufflet selon l'une quelconque des revendications précédentes, la deuxième cire étant le bisstéaramide d'éthylène.

10. Composition de polymère comprenant :
a. un élastomère de polyester thermoplastique ;
b. une première cire qui est un amide insaturé en une quantité comprise entre 0,01 et 0,6 % en poids comportant la formule (1a) et/ou la formule (1b)
**Rₓ-CO-NH-(CH₂)ₙ-NH-CO-Rₓ** formule (1a)
**R_{y}-NH-CO-(CH₂)ₙ-CO-NH-R_{y}** formule (1b)
dans lesquelles n est compris entre 1 et 8 ;
et Rₓ et R_{y} sont un groupe alcényle doté d'un nombre d'atomes de carbone compris entre 8 et 22 ;
c. une deuxième cire qui est un amide saturé en une quantité comprise entre 0,01 et 1,0 % en poids comportant la formule (2a) et/ou la formule (2b)
**Rᵥ-CO-NH-(CH₂)ₙ-NH-CO-Rᵥ** formule (2a)
**R_{w}-NH-CO-(CH₂)ₙ-CO-NH-R_{w}** formule (2b)
dans lesquelles n est compris entre 1 et 8 ;
et Rᵥ et R_{w} sont un groupe alkyle doté d'un nombre d'atomes de carbone compris entre 8 et 22 ;
le % en poids étant donné par rapport au poids total de la composition de polymère et l'élastomère de polyester thermoplastique comprenant des segments durs et des segments souples de polyester issus d'un autre polymère.

11. Composition de polymère selon la revendication 10, l'élastomère de polyester thermoplastique comprenant des segments souples de poly(tétrahydrofuranne)diol ou de PEO-PPO-PEO glycol.

12. Composition de polymère selon la revendication 10 ou 11, le nombre d'atomes de carbone pour chaque Rₓ, R_{y}, Rᵥ, R_{w} étant compris entre 14 et 18.

13. Composition de polymère selon l'une quelconque des revendications 10 à 12, la différence en atomes de carbone de R dans la première cire et de R de la deuxième cire étant d'au plus 5.

14. Composition de polymère selon l'une quelconque des revendications 10 à 13, la première cire étant le bisoléamide d'éthylène et la deuxième cire étant le bisstéaramide d'éthylène.
